Europäisches Patentamt

European Patent Office

Office européen des brevets

(11) Numéro de publication: **0 382 589**
**A1**

---

(12) ## DEMANDE DE BREVET EUROPEEN

(21) Numéro de dépôt: 90400111.2

(51) Int. Cl.⁵: **B64D 1/04, F42C 14/06**

(22) Date de dépôt: **16.01.90**

(30) Priorité: 20.01.89 FR 8900684

(43) Date de publication de la demande:
**16.08.90 Bulletin 90/33**

(84) Etats contractants désignés:
**BE CH DE GB GR IT LI NL SE**

(71) Demandeur: **THOMSON-BRANDT ARMEMENTS**
**Tour Chenonceaux 204, rond-point du Pont**
**de Sèvres**
**F-92516 Boulogne-Billancourt(FR)**

(72) Inventeur: **Joset, Gérard**
**THOMSON-CSF SCPI Cédex 67**
**F-92045 Paris la Défense(FR)**

(74) Mandataire: **Benoit, Monique et al**
**THOMSON-CSF SCPI**
**F-92045 PARIS LA DEFENSE CEDEX 67(FR)**

---

(54) **Dispositif de sécurité pour charges largables.**

(57) L'invention concerne un dispositif de sécurité positionné sur une charge largable (1) a partir d'un porteur (24) empêchant d'une part l'armement inopiné de la charge lorsque celle-ci est accrochée sous le porteur et permettant d'autre part de connaître si une tentative d'armement a été effectuée antérieurement et ce, grâce à la visualisation d'une position d'un palpeur du porteur (3) faisant partie du dispositif de sécurité.

Le déploiement du dispositif de sécurité se fait par l'intermédiaire d'un câble (2) lié au porteur (24). Au moment du largage, le câble (2) muni d'une olive (13) entraîne, grâce à un système d'entraînement, un palpeur (3) qui lui-même est verrouillé par un système de verrouillage (19) permettant la visualisation de la position du palpeur 3 et libérant ainsi le système d'entraînement autorisant l'armement de la charge.

Application aux charges explosives militaires aéroportées.

PYLONE

FIG.4

## DISPOSITIF DE SECURITE POUR CHARGES LARGABLES

L'invention concerne le domaine des charges largables à partir d'un aéronef auquel elles sont fixées et en particulier leur dispositif de sécurité pour empêcher leur armement inopiné avant le largage de ces charges.

La plupart des charges largables, notamment les charges militaires et les engins porteurs de sous-munitions, impose sur ces charges la présence d'un certain nombre de sécurités qui ne doivent être retirées qu'au cours de la phase de largage de la charge. Ces sécurités doivent, d'une part, interdir un armement de la charge réalisé par l'intermédiaire d'un câble qui active des moyens de déclenchement autorisant une mise à feu de la charge ou, d'autre part, empêcher le retrait d'autres sécurités susceptible de déclencher l'armement de la charge. Ces sécurités sont, dans le cas général, retirées par l'action de câbles généralement appelés sécurités largables, dont une extrémité est reliée à un dispositif ayant pour fonction de retirer la sécurité lorsqu'une traction d'une force déterminée est exercée sur le câble, l'autre extrémité étant reliée à l'aéronef. La traction sur le câble est assurée par l'action de la charge pendant la phase de largage. Des dispositifs de sécurité équipés d'un palpeur empêchant l'armement d'une charge avant son largage ont été mis au point mais leur réalisation ne résout pas tous les problèmes, notamment celui de savoir si un câble a été tiré c'est-à-dire qu'une sécurité a été retirée lors d'une quelconque manipulation de la charge, avant son accrochage sous un aéronef.

Le but de l'invention est de remédier à ces inconvénients en utilisant un dispositif de sécurité empêchant l'armement inopiné de la charge avant son largage, grâce à un palpeur de présence permettant d'indiquer en outre si une opération a été effectuée sur le câble déclenchant l'armement de la charge grâce à la visualisation d'une position du palpeur.

L'objet de l'invention est un dispositif de sécurité pour une charge largable à partir d'un porteur auquel elle est attachée comprenant un câble et un palpeur empêchant un armement inopiné de la charge qui, sous l'effet d'une traction suffisante du câble fixé au porteur, passant à l'intérieur du palpeur et muni d'une olive située à une distance déterminée d'une butée placée à l'intérieur du palpeur, est animé d'un mouvement de translation limité par le porteur lorsque la charge est placée sous le porteur, le dispositif étant caractérisé en ce que le palpeur comporte des moyens de verrouillage permettant une visualisation d'une position, après translation, du palpeur.

D'autres caractéristiques et avantages de la présente invention apparaîtront à la lecture de la description suivante, la dite description étant faite en relation avec les dessins joints dans lesquels :

- la figure 1 représente la charge en stockage munie du dispositif selon l'invention ;

- la figure 2 représente la charge munie du dispositif selon l'invention et accrochée sous un aéronef ;

- la figure 3 représente la charge accrochée sous un aéronef munie d'un second palpeur réglable équipant le dispositif selon l'invention ;

- la figure 4 représente la charge, munie du dispositif selon l'invention, pendant la phase de largage ;

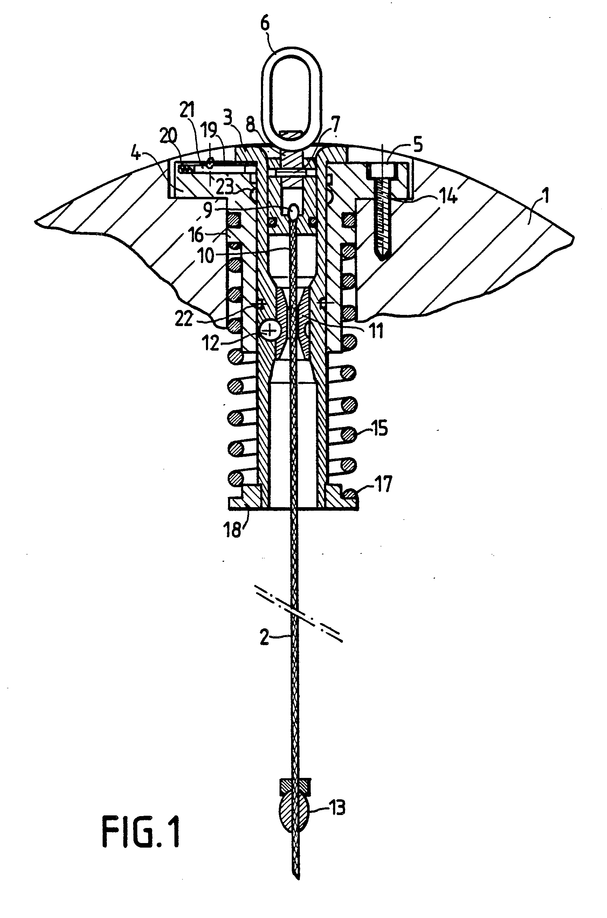

Sur la figure 1, on a représenté une charge 1 en stockage munie du dispositif de sécurité selon l'invention ; ce dispositif de sécurité comprend un palpeur de présence 3 empêchant un armement inopiné de la charge. Le palpeur de présence 3 est placé dans un canon support 4 positionné dans un orifice 5 pratiqué à la surface de la charge par lequel sort un anneau d'accrochage 6 fixé, par exemple par un fusible 7, à un élément 8 basé à l'intérieur du palpeur de présence 3. Le câble de tirage 2 est relié à un élément 8 grâce à un système de fixation, par exemple un embout 9 dans lequel l'extrémité 10 du câble de tirage 2 est fixée ; ce câble de tirage 2 passe à l'intérieur d'une butée, par exemple un verrou 11, bloquée dans sa position initiale, à l'intérieur du palpeur 3, pan l'intermédiaire d'au moins une clé 12. On positionne sur ce câble 2, une olive 13, la distance définie permet une course de sortie du câble 2 pour accrocher l'anneau à l'aéronef, sans que l'olive vienne en contact contre le verrou 11. Le canon support 4 est fixé par exemple à la charge 1 par une vis 14, ce canon 4 supporte une des extrémités d'un ressort de sécurité 15, l'autre extrémité 17 du ressort, (non comprimé dans cette phase de stockage), repose sur une extrémité 18 de la base du palpeur de présence 3. A l'intérieur également de ce même canon 4 est usiné un système de verrouillage 19, par exemple constitué d'un ressort 20 et d'un doigt de verrouillage 21 qui est translaté sous l'action du ressort 15 lorsqu'une gorge 22, par exemple rectangulaire, réalisé dans le palpeur de présence 3, se trouve en vis-à-vis de ce doigt de verrouillage 21. Il est envisageable de disposer symétriquement ce système de verrouillage en réalisant les aménagements considérés. Le canon support 4 comprend également au moins une encoche 23 permettant de libérer le verrou 11 lorsque la clé 12, après un mouvement de translation vertical, qui n'est possible qu'après éloignement de la charge de l'aéronef, se positionne à l'intérieur de cette encoche 23. Pour éviter tous risques d'arrachement dus à une traction trop importante, il est possible de réaliser symétriquement les différents systèmes de verrouillage et de fixation. L'agencement de tous les éléments à l'intérieur de l'orifice 5 assure une bonne étanchéité en stockage de la charge 1.

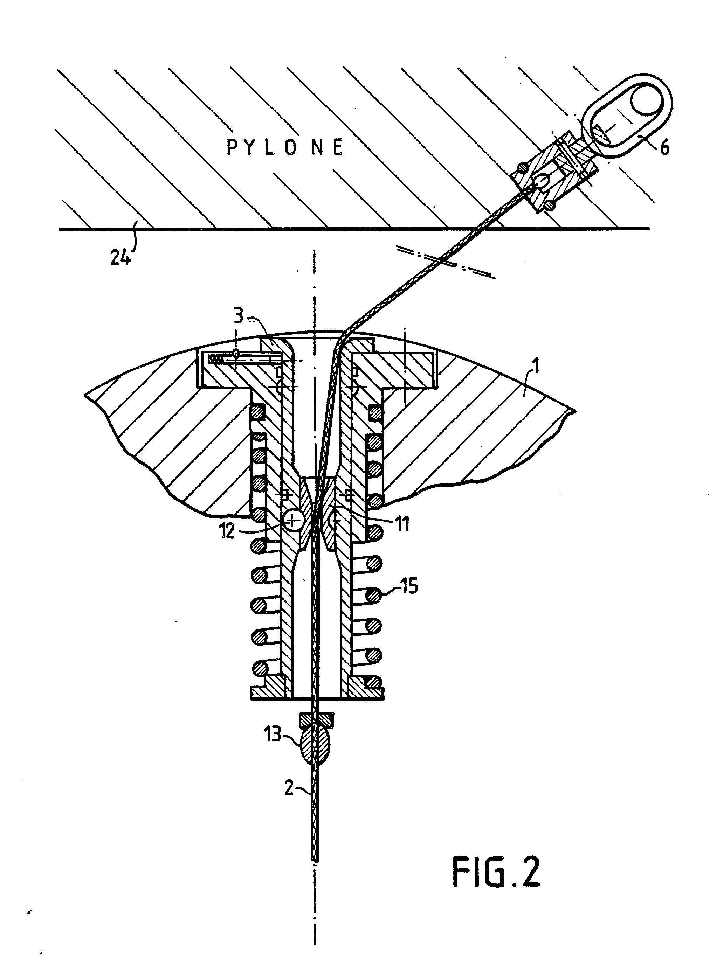

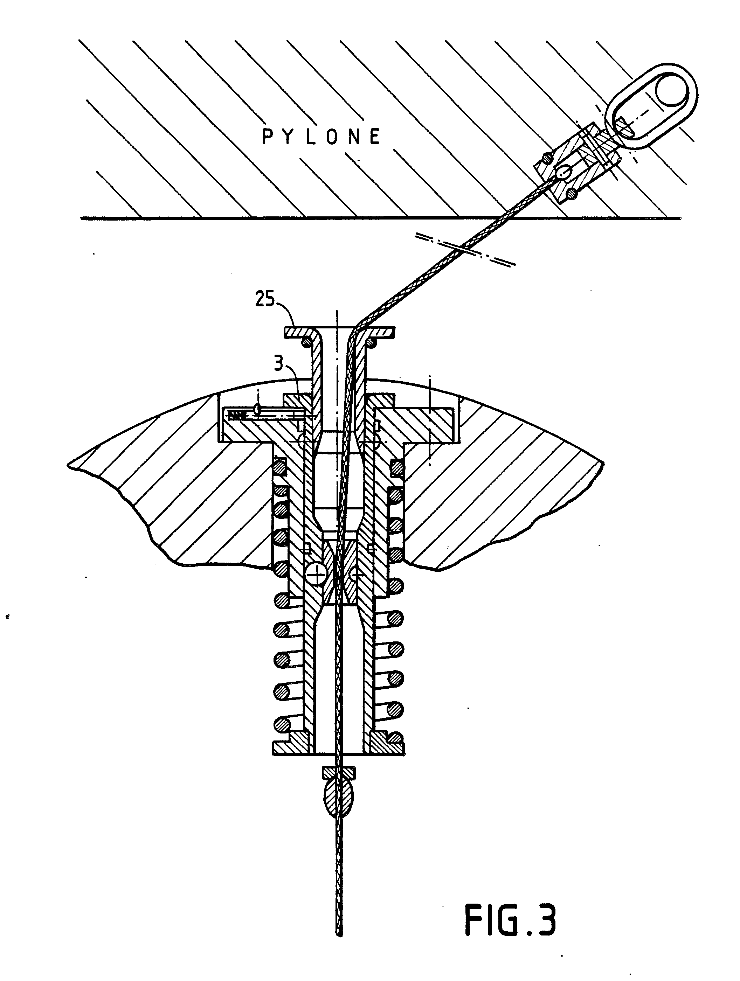

La figure 2 représente la charge 1 accrochée sous un aéronef et munie du dispositif selon l'invention. L'anneau d'accrochage 6 placé avant toute traction à la périphérie de la charge et à l'intérieur du palpeur de présence 3 est accroché à l'aéronef 24. La course du câble 2, comme mentionnée précédemment, est suffisamment importante pour que l'olive 13 fixée au câble 2 ne vienne pas entraîner le verrou 11 lors de l'accrochage de l'anneau. Lorsque l'anneau 6 est fixé, le déplacement du câble 2 continuant par exemple sous l'influence d'un élément volatile extérieur, l'olive 13 entre en contact avec le verrou 11 qui, par l'intermédiaire de la clé 12, entraîne le palpeur de présence 3 en comprimant le ressort 15. Le palpeur de présence 3 sort de la charge jusqu'à ce qu'il rencontre par son extrémité extérieure une partie fixe de l'aéronef et ceci quand le tirage du câble 2 a lieu lorsque la charge est encore accrochée à l'aéronef. On voit dans ce cas, que le tirage du câble 2 est limité par le palpeur de présence 3 arrivant en butée contre l'aéronef. La position de l'olive 13 par rapport au verrou 11 du palpeur de présence 3 et la distance de translation du palpeur de présence 3 par rapport à l'aéronef sont calculées de manière à ce que l'armement de la charge ne puisse avoir lieu dans ce cas. Il est possible de rencontrer des aéronefs non conformes à certaines normes aéronautiques dont la distance avec les charges utilisées n'empêche pas le déplacement complet du palpeur de présence 3 libérant ainsi le verrou 11 et rendant ainsi possible la course nécessaire au déclenchement des moyens de mise à feu de la charge. Pour cette raison, il peut être utilisé, comme le montre la figure 3, un autre palpeur de présence réglable 25 positionné à l'intérieur du palpeur de présence 3 par un système de fixation, par exemple une tige filetée et un écrou permettant ainsi de régler une hauteur déterminée suivant l'aéronef en présence.

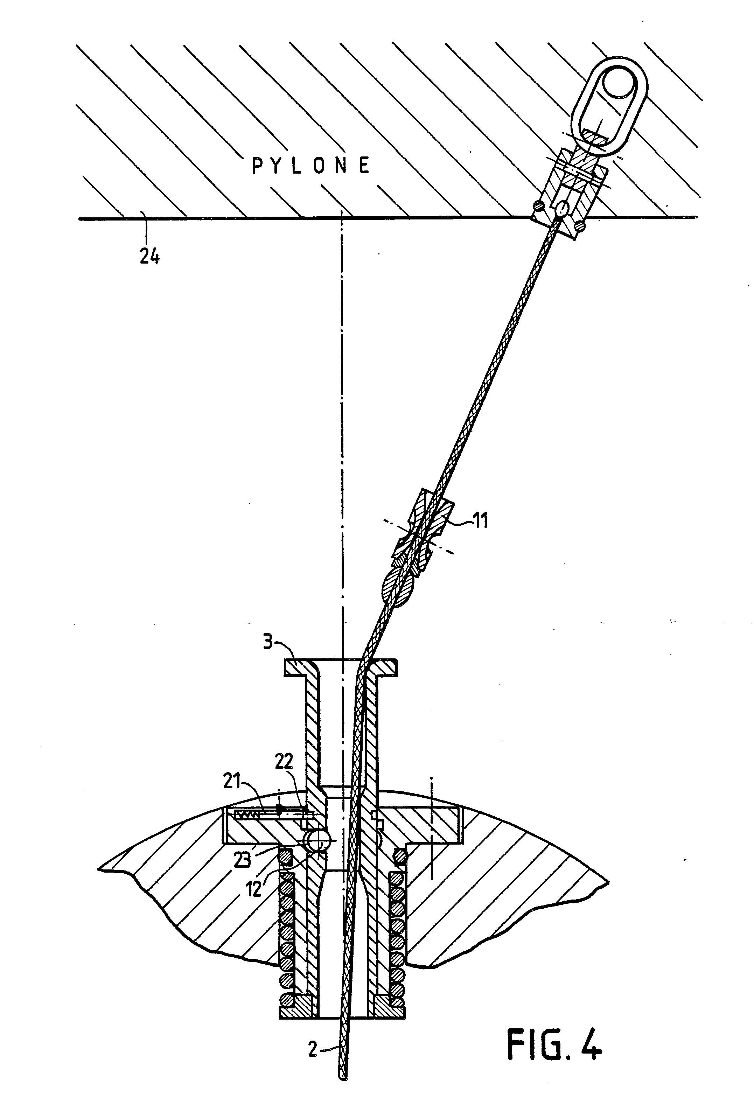

L'armement de la fusée avant le largage, lorsque la charge est placée sous l'aéronef, n'est donc pas possible. On voit comme représenté sur le schéma de la figure 4 que, si l'aéronef 24 est écarté du palpeur de présence 3, ce qui est le cas lors du largage de la charge, le palpeur de présence 3 peut continuer sa translation jusqu'à ce que le doigt de verrouillage 21 se trouve en vis-à-vis de la gorge rectangulaire 22 du palpeur de présence 3. A ce même instant, la clé 12 s'échappe dans une encoche 23 prévue à cet effet et libère ainsi le verrou 11 autorisant de ce fait la suite de la course du câble 2 permettant de retirer, par exemple, d'autres sécurités ou de déclencher directement les moyens de mise à feu de la charge 1. Le palpeur de présence 3 est verrouillé et est en saillie de la charge 1. La visualisation de la position du palpeur de présence 3, après sa translation, permet d'aboutir au fait qu'une traction a été exercée sur le câble 2, que, par rapport à la fonction de ce câble 2, toutes approches ou manipulations de la charge 1 devront être réalisées avec une extrême prudence, et enfin qu'une charge, dont le palpeur est dans une position de "sortie verrouillée", ne pourra pas être accrochée sous un aéronef.

La présente invention s'applique sur toutes les charges largables équipées de fusée d'ogive ou (et) de fusée de culot en vue de retirer, par exemple, les sécurités des dites fusées au cours du largage. Elle est également applicable entre autre sur tous les engins largables porteurs d'armes, chaque fois que le larguage doit commander une fonction interdite avant le largage.

## Revendications

1. Dispositif de sécurité pour une charge (1) largable à partir d'un porteur (24) auquel elle est attachée comprenant un câble (2) et un palpeur (3) empêchant un armement inopiné de la charge qui, sous l'effet d'une traction suffisante du câble (2) fixé au porteur (24), passant à l'intérieur du palpeur (3) et muni d'une olive (13) située à une distance déterminée d'une butée placée à l'intérieur du palpeur (3), est animé d'un mouvement de translation limité par le porteur (24) lorsque la charge (1) est placée sous le porteur (24), le dispositif étant caractérisé en ce que le palpeur (3) comporte des moyens de verrouillage permettant une visualisation d'une position, après translation, du palpeur (3).

2. Dispositif de sécurité selon la revendication 1, caractérisé en ce que les moyens de verrouillage comprennent un système de verroulllage (19), une gorge (22), au moins une encoche (23) et au moins une clé (12).

3. Dispositif de sécurité selon la revendication 2, caractérisé en ce que le système de verrouillage (19) comprend un ressort (20) et un doigt de verrouillage (21).

4. Dispositif de sécurité selon les revendications 2 et 3, caractérisé en ce que le doigt de verrouillage (21) se positionne dans la gorge (22) sous l'action du ressort (20) lorsque le palpeur de présence a effectué un mouvement longitudinal permettant aux divers éléments en présence d'être en vis-à-vis.

5. Dispositif de sécurité selon la revendication 2, caractérisé en ce que la gorge (22) est d'une forme telle qu'elle empêche le retour du palpeur en position initiale.

6. Dispositif de sécurité selon la revendication 1, caractérisé en ce que la butée placée à l'intérieur du palpeur (3) est un verrou (11) permettant le passage en son centre du câble (2).

7. Dispositif de sécurité selon la revendication 6, caractérisé en ce que l'olive (13) placée sur le câble (2), est mise en contact contre le verrou (11), lors d'une traction suffisante sur ce câble (2), pour donner au palpeur (3) un mouvement de translation verticale et ainsi déclencher le fonctionnement des différents systèmes.

8. Dispositif de sécurité selon la revendication 2, caractérisé en ce que la clé (12) bloque le verrou (11) avant le verrouillage du palpeur (3).

9. Dispositif de sécurité selon la revendication 2, caractérisé en ce que la clé (12) s'échappe dans l'encoche (23) au verrouillage du palpeur (3) libérant ainsi le verrou (11).

10. Dispositif de sécurité selon la revendication 4, caractérisé en ce que le mouvement vertical du palpeur (3) entraîne la compression d'un ressort de sécurité (15).

11. Dispositif de sécurité selon la revendication 10, caractérisé en ce que le ressort de sécurité (15) repose l'une de ses extrémités (17) sur le palpeur (3) et l'autre extrémité sur un canon support (4).

12. Dispositif de sécurité selon la revendication 10, caractérisé en ce que le canon support (4) est logé dans un orifice (5) à la périphérie de la charge et sur lequel est placé le palpeur (3).

FIG.1

PYLONE

FIG.2

PYLONE

25

3

FIG.3

P Y L O N E

24

3

22

21

23

12

11

2

FIG. 4

Office européen
des brevets

**RAPPORT DE RECHERCHE EUROPEENNE**

Numero de la demande

EP 90 40 0111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 440 060 (BERKLEY)<br>* colonne 3, lignes 46 - 61;<br>revendications 1-5; figures 1-3 *<br>--- | 1 | B 64 D 1/04<br>F 42 C 14/06 |
| A | US-A-4 322 998 (FOWLER ET AL.)<br>* colonne 3, ligne 49 - colonne 4,<br>ligne 21; figure 1 *<br>----- | 1 | |

|  | DOMAINES TECHNIQUES RECHERCHES (Int. Cl.5) |
|---|---|
|  | F 41 F<br>F 42 C<br>B 64 D |

Le présent rapport a été établi pour toutes les revendications

| Lieu de la recherche | Date d'achèvement de la recherche | Examinateur |
|---|---|---|
| LA HAYE | 23-04-1990 | ERNST R.T. |